# EUROPEAN PATENT SPECIFICATION

(11) **EP 2 420 747 B1**
(45) Date of publication and mention of the grant of the patent: **06.05.2020**
(21) Application number: 11177799.1
(22) Date of filing: 17.08.2011
(51) Int. Cl.: F24D 3/18, F24D 17/02, F24D 19/10, G05D 23/19, G06Q 30/02, F24D 3/08

(54) **Heat pump**
Wärmepumpe
Pompe à chaleur

(30) Priority: 17.08.2010 KR 20100079198
(43) Date of publication of application: 22.02.2012
(73) Proprietor: LG Electronics, Inc., Seoul, 150-721 (KR)
(72) Inventor: Noh, Jinhee, 641-711 Gyeongnam (KR); Paik, Woohyun, 641-711 Gyeongnam (KR); Park, Heewoong, 641-711 Gyeongnam (KR); Park, Noma, 641-711 Gyeongnam (KR); Choi, Hwanjong, 641-711 Gyeongnam (KR); Ha, Samchul, 641-711 Gyeongnam (KR)
(74) Representative: Vossius & Partner Patentanwälte Rechtsanwälte mbB

(56) References cited:
- EP-A1- 2 103 884
- EP-A2- 2 085 706
- WO-A1-2006/057594
- JP-A- 2009 264 718
- US-A- 5 727 396
- US-A- 5 779 143
- US-A1- 2006 116 789
- US-A1- 2008 023 564

## Description

### BACKGROUND

### 1. Field

A heat pump is disclosed herein.

EP 2 085 706 A2 discloses a hot water storage type heat source device which includes a heating section for heating water with electric power, a boiling control section for receiving electric power and controlling the heating section, and a hot water storage section for storing hot water heated by the heating section.

JP 2009-264718 A discloses a heat pump hot water system of high heat exchange efficiency, which includes an outdoor unit, a heating/cooling panel, an indoor unit having a refrigerant water heat exchanger, a hot water storage tank, a water refrigerant heat exchanger for the tank, and a water pump, and the water refrigerant heat exchanger for the tank disposed in parallel with the water refrigerant heat exchanger.

EP 2 103 884 A1 discloses a room heating comprising a heat pump.

US 5 779 143 A discloses a hydronic heating system including a single self-contained hydronic control unit. The hydronic control unit allows for zoned heating operation in which a series of individual room thermostats and zone valves control the flow of heated water into each of the heating zones.

US 2008/023564 A1 discloses a method for centrally controlling a hybrid furnace, heater, and boiler system installation which increases the operational cost efficiency of the hybrid installation by computing the operational efficiency and fuel costs.

US 2006/116789 A1 discloses a control system for achieving economic operation of CHP systems according to the preamble of claim 1.

### BRIEF DESCRIPTION OF THE DRAWINGS

Embodiments will be described in detail with reference to the following drawings in which like reference numerals refer to like elements, and wherein:
FIG. 1 is a block view of a heat pump according to an embodiment;
FIG. 2 is a detailed diagram of the heat pump of FIG. 1;
FIG. 3 is a diagram illustrating a flow of water and refrigerant in one operation mode of the heat pump of FIG. 1;
FIG. 4 is a diagram illustrating a flow of water and refrigerant in another operation mode of the heat pump of FIG. 1;
FIG. 5 is a diagram illustrating a flow of water and refrigerant in a further operation mode of the heat pump of FIG. 1;
FIG. 6 is a diagram illustrating a flow of water and refrigerant in a still further operation mode of the heat pump of FIG. 1;
FIG. 7 is a flow chart illustrating a minimum pricing operation mode as a control method for a heat pump according to an embodiment; and
FIG. 8 is a flow chart illustrating a peak pricing rate operation mode as a control method of the heat pump according to an embodiment.

### DETAILED DESCRIPTION

In general, a heat pump refers to a cooling/heating device that changes a low temperature heat source into a high temperature heat source and vice versa using heat or condensation heat of refrigerant, as a transport. The heat pump may include an outdoor unit or device having a compressor and an outdoor heat exchanger, and an indoor unit or device having an expansion valve and an indoor heat exchanger.

When the heat pump is used for heating a room, the heat pump may replace fossil fuel. However, if a temperature of external air drops, heating efficiency may deteriorate drastically or a sufficient heating function might not be provided in a case that the heat pump is used as a heating source. As a result, the heat pump often alone cannot provide sufficient heating or quick-hot-water-supply.

Also, the heat pump and a boiler may be used together for heating. In this case, when a power rate or gas rate per unit heat quantity is changed, methods for minimizing a total rate of energy consumed for heating may be required.

Embodiments disclosed herein provide a heat pump that can be operated in communication with a boiler, selectively, based on a temperature of external air or an electric power rate per unit heat quantity, to provide a radiation heating operation.

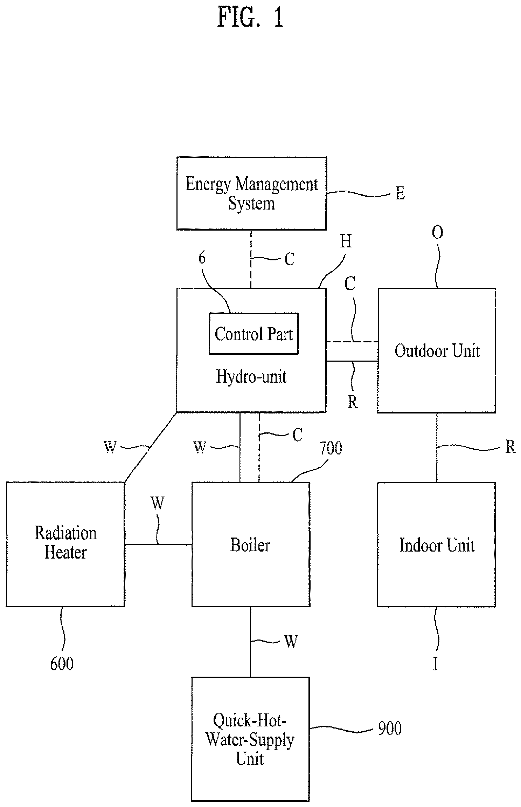

FIG. 1 is a block view of a heat pump according to an embodiment. The heat pump 1000 of FIG. 1 may include an outdoor unit or device (O) configured to compress refrigerant; a hydro-unit or device (H) configured to heat-exchange the compressed refrigerant with water; a boiler 700 configured to heat circulating water or water supplied from a commercial water supply system; a quick-hot-water-supply unit or device 900 configured to receive the water having passed through the boiler 700; a radiating heater 600 configured to heat a floor of a room by circulating the water having passed through the hydro-unit (H) or both the hydro-unit 600 and the boiler 700, and a control part or controller configured to control the outdoor unit (O), the hydro-unit (H), and the boiler 700.

When the heat pump 1000 is used for heating a room, the outdoor unit (O) may supply the refrigerant compressed by a compressor. In a case in which the indoor unit (I) is provided, the outdoor unit (O) may heat or cool a room, which is a conditioning object, based on a user' request.

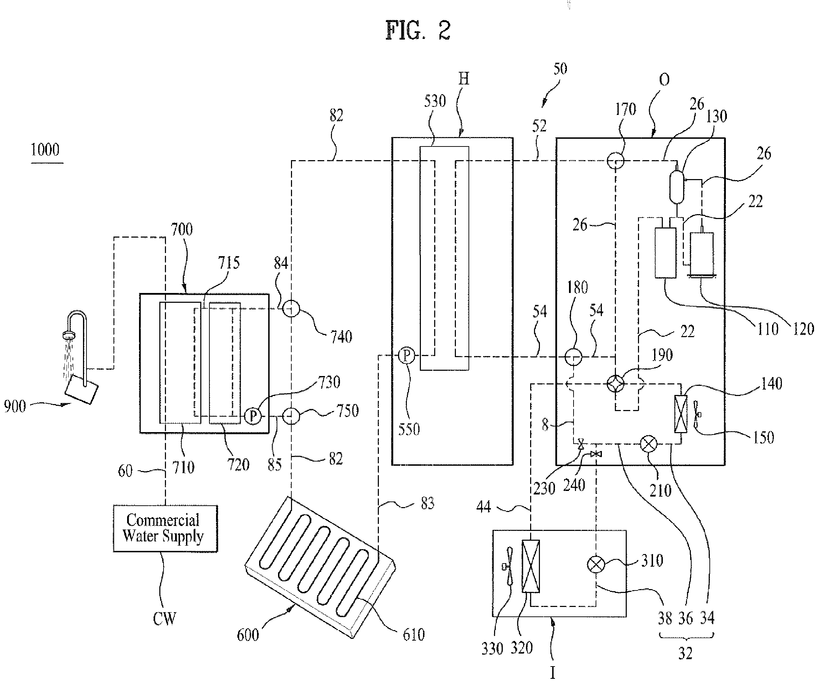

The hydro-unit (H) may heat-exchange the refrigerant supplied from the outdoor unit (O) with the water circulating through the radiation heater 600. For convenience of explanation, FIG. 2 illustrates the radiation heater 600 as including a floor heating pipe, that is radiation heater pipe 610 that heats a floor of a room. Such a radiation heater having the floor heating pipe will be used as an example. More specifically, the radiation heater 600 radiates the heated water that heats the room. The radiation heater 600 may be a floor heating pipe or a radiator.

As a result, radiation heating is provided using the heat generated in a process of condensing refrigerant. However, if a temperature of external air falls to a preset or predetermined temperature below approximately zero degrees, the efficiency of the radiation heating function gained by the heat exchange between the refrigerant and the water may deteriorate drastically. Because of this, the heat pump 1000 according to an embodiment may further include the boiler 700.

The boiler 700 may also provide a heating function, like the hydro-unit (H). The boiler 700 and the hydro-unit (H) may be selectively operated based on the temperature of the external air and a gas rate billed by unit heat amount or the power rate.

In addition, when the temperature of the external air is equal to or less than the preset or predetermined temperature in a case in which the boiler 700 is not operated, the water circulating through the hydro-unit (H) and the radiation heater 600 may pass through the boiler 700 to prevent the boiler 700 from freezing and bursting.

The heat pump 1000 according to an embodiment may receive information on power rates or gas rates from an energy management device (E) provided in a house under a Smart Grid environment in real time or periodically. The control part or controller of the hydro-unit (H) may control the hydro-unit (H), the boiler 700, or the outdoor unit (O) based on the received information or stored information on the power rates.

The heat pump according to embodiments is shown as a heat pump including the outdoor unit (O), the hydro-unit (H), and the boiler 700. The outdoor unit (O), the hydro-unit (H), and the boiler 700 may be controlled by the control part of the heat pump, or by an energy management system (EMS) connected with the control part of the heat pump so as to be able to communicate with the control part.

The control part of the heat pump may be connected with the energy management system (EMS) of a Smart Grid. The control part may be provided in the hydro-unit (H), and the hydro-unit may be connected to and communicate with the outdoor unit (O), the hydro-unit (H), and the boiler 700. The outdoor unit (O) and the hydro-unit (H) may be connected to each other by a refrigerant pipe (R). The hydro-unit (H), the radiation heater 600, and the boiler 700 may be connected with each other by a water pipe (W) through which water may flow.

Hot water may be supplied to a user by the quick-hot-water-supply unit 900 after the boiler 700 is selectively operated.

FIG. 2 is a detailed diagram of the heat pump of FIG. 1. The air conditioning operation performed by the heat pump 1000 of FIG. 2 may include a heating operation that heat-air-conditions a room, which is an air-conditioning object, by sucking internal air, and a cooling operation that cool-air-conditions a room, which is an air-conditioning object, by sucking internal air.

An accumulator 110 may be installed in an inlet passage 22 of the compressor 120 provided in the outdoor unit (O) to prevent liquid refrigerant from flowing into the compressor 120. An oil separator 130 may be installed in an outlet passage 26 of the compressor 120 to separate oil from refrigerant and oil exhausted from the compressor 120 and return the oil to the compressor 120. The outdoor heat exchanger 140 may condense or evaporate refrigerant while heat-exchanging it with external air. The outdoor heat exchanger 140 may be an air refrigerant heat exchanger capable of heat-exchanging refrigerant with the external air, or it may be a water refrigerant heat exchanger capable of heat-exchanging cooled water with the refrigerant. In the following description of an embodiment, the outdoor heat exchange 140 is embodied as an air refrigerant heat exchanger that heat-exchanges external air with refrigerant for convenience of explanation; however, embodiments are not so limited. When the outdoor heat exchanger 140 is configured as an air refrigerant heat exchanger, an outdoor fan 150 may be installed to blow external air to the outdoor exchanger 140.

The outdoor heat exchanger 140 provided in the outdoor unit (O) may be connected with an indoor heat exchanger 320 provided in the indoor unit (I) by a heat exchanger connection pipe 32. Expansion devices 210 and 310 may be provided in the heat exchanger connection pipe 32. The expansion devices 210, 312 may include an outdoor expansion device 210 installed adjacent to the outdoor heat exchanger 140 and an indoor expansion device 310 installed adjacent to the indoor heat exchanger 320.

The heat exchanger connection pipe 32 may include an outdoor heat exchanger-outdoor expansion device connection pipe 34 that connects the outdoor heat exchanger 140 with the outdoor expansion device 210, an expansion device connection pipe 36 that connects the outdoor expansion device 210 with the indoor expansion device 310, and an indoor expansion device-indoor heat exchanger connection pipe 38 that connects the indoor expansion device 310 with the indoor heat exchanger 320.

The indoor heat exchanger 320 may be a heat exchanger configured to cool or heat the room by heat-exchanging internal air with refrigerant. An indoor fan 39 may blow internal air to the indoor heat exchanger 320.

As a result, in a case in which the heat pump 1000 is operated in a cooling mode for cooling the room via the indoor unit (I), the refrigerant compressed in the compressor 120 of the outdoor unit (O) may pass through the outdoor heat exchanger 140, the expansion devices 210 and 310, and the indoor heat exchanger 320 sequentially, to be collected in the compressor 120. Thereafter, the refrigerant collected in the compressor 120 may be evaporated by the indoor heat exchanger 320 employed as an evaporator. In a case that the heat pump 1000 is operated in a heating mode for heating the room via the indoor unit (I), the refrigerant compressed in the compressor 120 of the outdoor unit (O) may pass through the indoor heat exchanger 320, the expansion devices 210 and 310, and the outdoor heat exchanger 140 sequentially, to be collected in the compressor 120. Thereafter, the refrigerant may be condensed by the indoor heat exchanger 320 employed as a condenser.

The outdoor unit (O) may be an air conditioner with both heating and cooling functions that passes the refrigerant compressed in the compressor 120 through the outdoor heat exchanger 140, the expansion devices 210 and 310, and the indoor heat exchanger 320 sequentially before collecting it in the compressor 120, in a heating mode, and that passes the refrigerant through the indoor heat exchanger 320, the expansion devices 210 and 310, and the outdoor heat exchanger 140 sequentially before collecting it in the compressor 120, in a cooling mode. The outdoor unit (O) may further include a heating/cooling direction control valve 190 that directs the refrigerant to flow through the compressor 120, the outdoor heat exchanger 140, the expansion devices 210 and 310, and the indoor heat exchanger 320 sequentially, or to flow through the compressor 120, the indoor heat exchanger 320, the expansion devices 210 and 310, and the outdoor heat exchanger 140 sequentially. The heating/cooling direction control valve 190 may be connected with the compressor 120 via the compressor inlet passage 22 and the compressor outlet passage 26, and it may be connected with the outdoor heat exchanger 140 via the outdoor heat exchanger connection pipe 42. It may also be connected with the indoor heat exchanger 320 via the indoor heat exchanger connection pipe 44.

The outdoor unit (O) may include a refrigerant control valve 170 that supplies the refrigerant supplied via the compressor outlet passage 26 toward the hydro-unit (H) or the heating/cooling direction control valve 190 selectively. The refrigerant control valve 170 may be a 3-way valve. When the refrigerant control valve 170 is a 3-way valve, it may be provided in the compressor outlet passage 26, and a hydro-unit supply passage 52 may be branched to supply the refrigerant toward the hydro-unit (H).

In addition, the outdoor unit (O) may include an auxiliary refrigerant control valve 180. The auxiliary refrigerant control valve 180 may be used to supply the refrigerant to a heat exchanger bypass passage 8, which will be described hereinafter, or toward the heating/cooling direction control valve 190. The auxiliary refrigerant control valve 180 may be a 3-way valve. When the auxiliary refrigerant control valve 180 is a 3-way valve, it may be installed in a hydro-unit collection passage 54 connected with the compressor outlet passage 26 that collects the refrigerant in the hydro-unit (H) and the heat exchanger bypass passage 8 may be branched therefrom.

The heat exchanger according to embodiments may further include a heat exchanger bypass valve 230 installed in the heat exchanger bypass passage 8 that controls the flow of the refrigerant, and a liquid refrigerant valve 240 installed between the heat exchanger bypass passage 8 and the indoor expansion device 310 that controls the flow of the refrigerant.

The heat pump 1000 according to embodiments may include the hydro-unit (H) to heat-exchange the refrigerant supplied by the outdoor unit (O) with water for radiation heating. The hydro-unit (H) may further include the hydro-unit heat exchanger 530 to heat-exchange the refrigerant with water.

The hydro-unit heat exchanger 530 may be provided in a hydro-unit circulation passage 50 of the outdoor unit (O) to condense, expand, and evaporate the refrigerant used in the quick-hot-water-supply unit after exhausted from the compressor 120. The hydro-unit circulation passage 50 may include a hydro-unit supply passage 52 through which the refrigerant of the outdoor unit (O), in particular, the refrigerant compressed in the compressor 120, flows to the hydro-unit heat exchanger 530, and a hydro-unit collection passage 54 through which the refrigerant exhausted from the hydro-unit heat exchanger 530 flows to the outdoor unit (O), in particular, the heating/cooling direction control valve 190.

An end of the hydro-unit supply passage 52 may be connected with the refrigerant control valve 170 provided in the compressor outlet passage 26 and the other end may be connected with the hydro-unit heat exchanger 530. An end of the hydro-unit collection passage 54 may be connected with hydro-unit heat exchanger 530 and the other end may be connected with the compressor outlet passage 26.

When the refrigerant control part or controller 6 controls the refrigerant to flow to the hydro-unit heat exchanger 530, the hydro-unit heat exchanger 530 may function as a desuperheater that condenses the refrigerant overheated in the compressor 120 by heat-exchanging it with the water used for radiation heating.

The hydro-unit heat exchanger 530 may have a refrigerant passage through which the overheated refrigerant flows and a passage through which the water used for the radiation heating flows. The hydro-unit heat exchanger 530 may be a double-pipe type heat exchanger having a heat transfer member located between the refrigerant passage and the water passage, which may be formed in internal and external areas thereof, or alternatively, it may be a plate type heat exchanger which has the heat transfer member located between the refrigerant passage and the water passage.

The radiation heater 600 may be a radiator or a heating pipe for heating a floor, which are installed in a room.

With the heat pump 1000 according to embodiments, the hydro-unit heat exchanger 530 may be connected with the radiation heater 600 installed in the floor of the room by a floor supply pipe 82 and a floor collection pipe 83. A floor heating pump 550 may be installed in the floor collection pipe 83.

For explanation convenience, the radiation heater part 600 is shown installed in the floor of the room and connected with the hydro-unit heat exchanger 530 by the floor supply pipe 82 and the floor collection pipe 83 with the floor heating pump 520 installed in the floor collection pipe 83; however, embodiments are not limited to this configuration .

The heat pump 1000 according to embodiments may further include the boiler 700 as a means for providing a heat source used in heating or quick-hot-water-supply, rather than the hydro-unit (H).

When the external temperature is equal to or less than a preset or predetermined temperature, efficiency of heating that uses refrigerant may deteriorate drastically. Because of this, when the external temperature drops lower than the preset temperature, the heat pump 1000 may selectively operate the boiler 700 as a heat source for heating.

The boiler 700 may include a combustion heating part or heater 720 configured to combust fossil fuels and a heat exchange heating part or heater 710 configured to heat water heated in the combustion heating part 720 using a heat exchange method. The combustion heating part 720 may heat the water supplied via the floor supply pipe 82. The heat exchange heating part 710 may heat-exchange water supplied from a quick-hot-water tank (not shown), which will be described later, with the water heated in the combustion heating part 720, to heat the water supplied from the quick-hot-water tank.

The floor supply pipe 82 may include a first boiler valve 740 and a second boiler valve 750. The first boiler valve 740 and the second boiler valve 750 may be provided in the floor supply pipe 82, with a boiler supply pipe 84 and a boiler collection pipe 85 connected thereto, respectively. The boiler supply pipe 84 and the boiler collection pipe 85 may be pipes that pass through the boiler 700. The boiler supply pipe 84 and the boiler collection pipe 85 may guide the water circulating through the hydro-unit (H) to pass through the combustion heating part 720 provided in the boiler 700. The first boiler valve 740 and the second boiler valve 750 may directly supply the water supplied from the hydro-unit (H) to the radiation heater 600, or they may selectively shut off the passage so that the water flows through the combustion heating part 720 of the boiler 700.

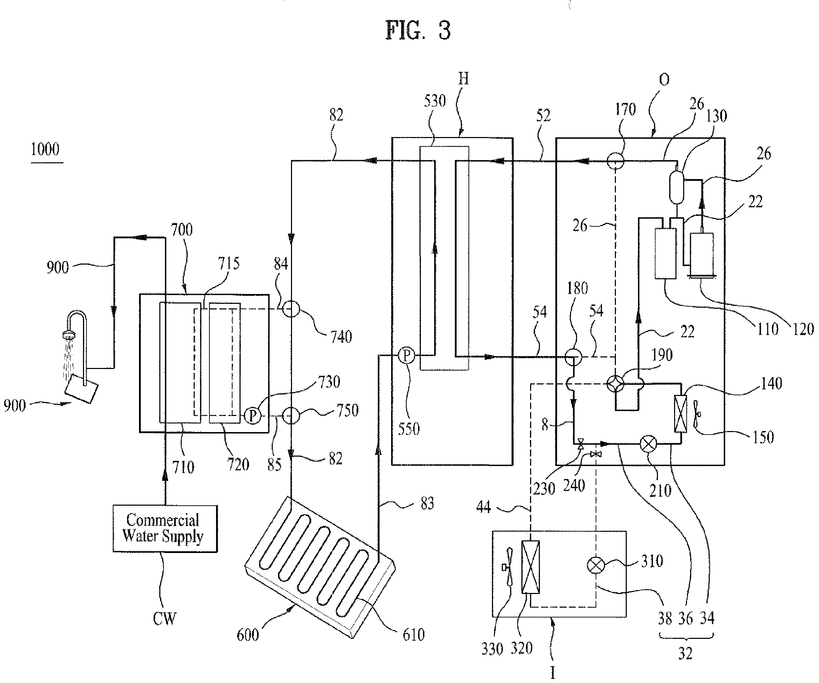

The water may be supplied from the hydro-unit (H) to pass through the boiler 700, which it will be described in detail later, to prevent the boiler 700, which is not being operated, from freezing or bursting, or to operate the boiler 700. Water supplied from a commercial water supply (CW) may pass through a boiler passing pipe 60 and the heat exchange heating part 710, to be selectively heated based on an operation state or a standby state of the boiler. FIG. 3 illustrates a flow of water and refrigerant in one operation mode of the heat pump of FIG. 1. FIG. 3 illustrates an operation mode for controlling the heat pump 1000 to perform a floor heating function of FIG. 1. For explanation convenience, it is shown that the indoor unit (I) is not operated. When the temperature of external air is equal to or greater than a preset or predetermined second temperature above freezing, the heat pump 1000 according to embodiments may be controlled to perform the floor heating function.

The preset second temperature above zero degree, which is a point of freezing, may be equal to or greater than approximately 3 °C equal to or less than approximately 7°C. For example, the preset second temperature may be approximately 5°C.

The heat pump 1000 according to embodiments may include the boiler 700. When the temperature of the external air is equal to or greater than the second temperature, the boiler 700 need not be operated. This is because the heat exchanging between the water and the refrigerant in the hydro-unit (H) can supply sufficient radiation heating.

The heat pump 1000 according to embodiments may perform the radiation heating operation by controlling the hydro-unit (H), the refrigerant condensed in the heat exchanger of the hydro-unit being supplied to the outdoor unit (O).

The refrigerant supplied to the outdoor unit (O) may be supplied to the outdoor heat exchanger 140. Thereafter, the refrigerant may be expanded in the outdoor expansion device 210 and evaporated in the outdoor heat exchanger 140. The refrigerant evaporated in the outdoor heat exchanger 140 may be supplied to the compressor 120.

The heating/cooling direction control valve 190 may supply the refrigerant evaporated in the outdoor heat exchanger 140 to the compressor 120, via the accumulator 110 provided at a front end of the compressor 120. The refrigerant compressed in the compressor 120 may then be supplied to the compressor outlet passage 26 via the oil separator 130.

The refrigerant compressed in the compressor 120 may be supplied to the hydro-unit (H) via the compressor outlet passage 26. The refrigerant supplied to the hydro-unit (H) via the compressor outlet passage 26 may be supplied to the hydro-unit heat exchanger 530. Thereafter, the refrigerant may be heat-exchanged with water in the hydro-unit heat exchanger 530, and the heat-exchanged water may be circulated through the radiation heating pipe 610 of the radiation heater 600.

In other words, the water circulating through the hydro-unit heat exchanger 530 and the heating pipe 610 of the radiation heater 600 may suck heat in the hydro-unit heat exchanger 530 and radiates the heat in the heating pipe 610 of the radiation heater 600. This process may be repeated.

The water circulating through the hydro-unit heat exchanger 530 and the radiation heating pipe 610 of the radiation heater 600 need not pass through the boiler 700, because the boiler 700 has little possibility of freezing and bursting when the temperature of the external air is equal to or greater than the preset second temperature above approximately 0°C. When a quick-hot-water-supply function or operation is required, an auxiliary quick-hot-water tank may not be necessary. That is, the water supplied from a commercial water supply system (CW) via the commercial water supply pipe 90 may be heated in the heat exchange heating part 730 of the boiler 700. Thereafter, hot water may be supplied to a user via the quick-hot-water-supply unit 900.

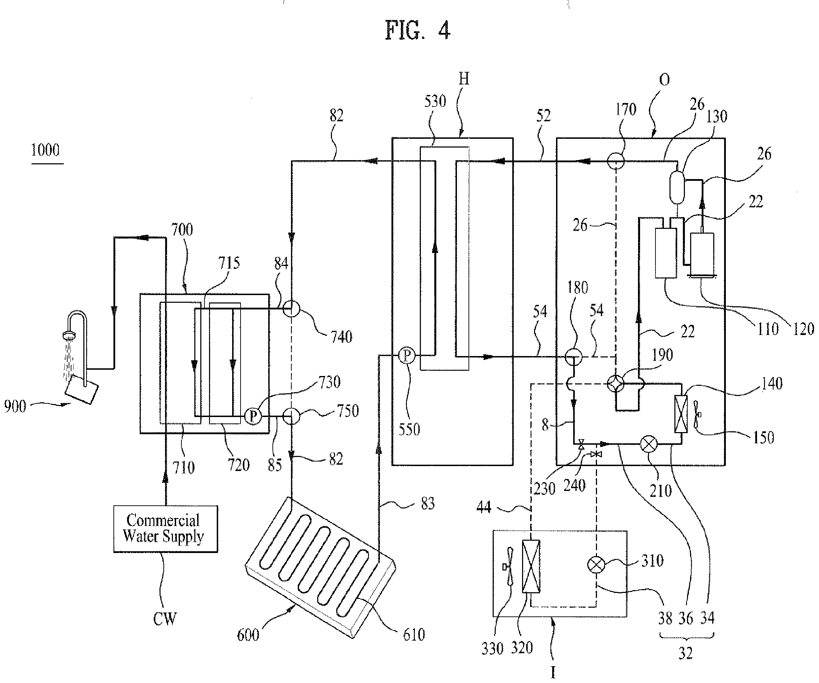

FIG. 4 is a diagram illustrating a flow of water and refrigerant in another operation mode of the heat pump of FIG. 1. With reference to FIG. 3, repetitive description has been omitted. Similar to the operation mode described with reference to FIG. 3, it may be assumed that the indoor unit (I) is not operated and that the floor heating function is provided by the heat pump 1000.

The embodiment of FIG. 4 shows an operation mode when the temperature of the external air is equal to or greater than a preset or predetermined first temperature below approximately 0°C and equal to or less than a preset or predetermined second temperature above approximately 0°C.

According to the operation mode shown in FIG. 4, water heat-exchanged with refrigerant in the hydro-unit heat exchanger 530 may be circulated through the radiation heating pipe 610 of the radiation heater 600, to heat the floor of the room, which is the same as the operation mode of FIG. 3.

However, the temperature of the external air may be the preset second temperature above approximately 0°C. The boiler 700 and the pipes therein may freeze and burst due to water remaining in the pipes of the boiler 700.

As mentioned above, when the temperature of the external air is equal to or less than the preset second temperature, the water not circulating but remaining in the pipes of the boiler 700 may freeze and burst. To prevent the freezing and bursting of the boiler 700, the heat pump 1000 according to embodiments may control or direct the water supplied to the radiation heater 600 to pass through the boiler 700, regardless of the operation state or the standby state of the boiler 700, when the temperature of the external air is equal to or less than the preset first temperature.

Here, the preset first temperature may be equal to or greater than approximately minus 7 degrees and equal to or less than approximately minus 3 degrees (-7°C ∼ -3°C). For example, when the temperature of the external air is equal to or greater than the preset first temperature, which may be approximately -5°C , the boiler 700 for heating the floor or hot-water-supply may not be operated necessarily and the floor heating may be performed by only the heat exchange performed in the hydro-unit (H).

However, as mentioned above, the water supplied to the radiation heater 600 may be controlled to pass through the boiler 700 to prevent the freezing and bursting of the boiler 700. In this case, the first boiler valve 740 and the second boiler valve 750 may be controlled so that the water heat-exchanged with the refrigerant in the second heat exchanger 730 passes through the boiler 700, and the floor heating pump 550 may be operated to pump the water circulating through the hydro-unit (H).

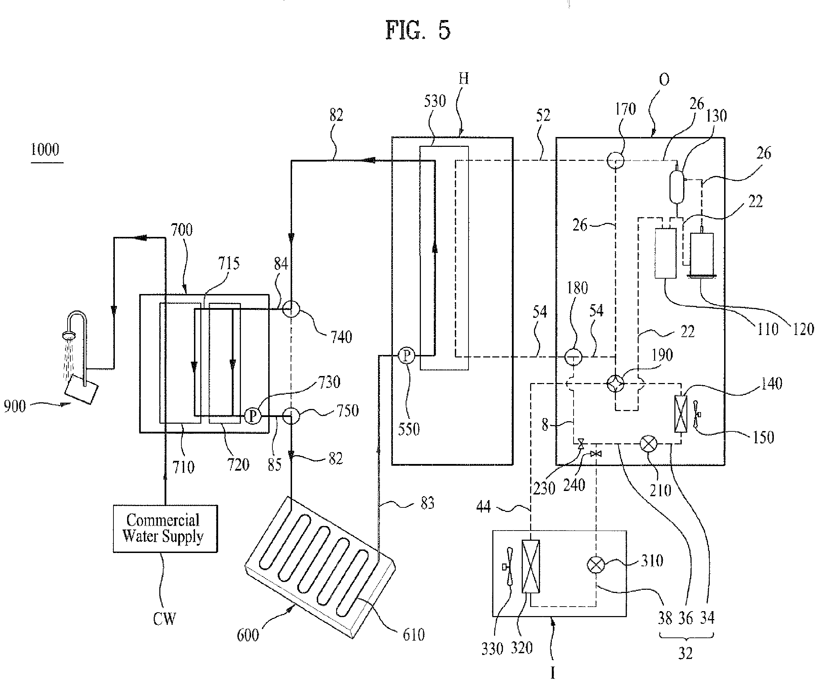

FIG. 5 is a diagram illustrating a flow of water and refrigerant in a further operation mode of the heat pump of FIG. 1. Compared with the description of FIGS. 3 and 4, repeated description has been omitted.

Like the operation modes mentioned above with reference to FIGS. 3 and 4, it may be assumed that the indoor unit (I) is not operated and that the boiler 700 instead of the heat pump 1000 is operated to heat the floor.

For example, the preset first temperature may be approximately - 7°C to approximately -3°C. When the temperature of the external air is equal to or less than the first preset temperature, which means it is cold weather in winter, the heating efficiency which uses the heat exchange of the refrigerant may deteriorate drastically and a satisfactory hot-water temperature cannot be reached. As a result, in a case that the temperature of the external air is very low, the operation of the hydro-unit (H) will be stopped and the boiler 700 will be operated. In the case of the floor heating, the water will be circulating along the same passage as the passage of the floor heating shown in FIG. 4. In other words, the water circulating through the hydro-unit heat exchanger 530 will be supplied to the radiation heater 600 via the combustion heating part 720 of the boiler 700.

With this embodiment, there is a different feature that the heat source for the floor heating is not the hydro-unit (H), but rather, the boiler 700. Even when the hydro-unit (H) is not operated, the floor heating pump 550 provided in the floor collection pipe 83 may be operated to circulate the water and the boiler pump 730 provided in the boiler 700 may be operated, too.

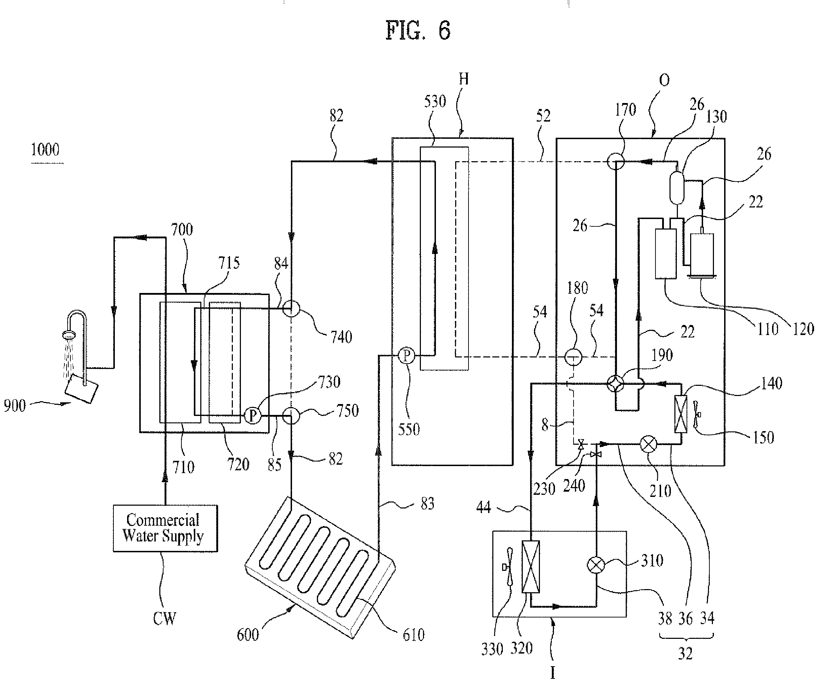

FIG. 6 is a diagram illustrating a flow of water and refrigerant in a still further operation mode of the heat pump of FIG. 1. Like the operation mode shown in FIG. 3, the operation mode shown in FIG. 6 is an operation mode performed when the temperature of the external air is equal to or less than the preset second temperature above approximately 0°C and equal to or greater than the preset first temperature below approximately 0°C. The operation mode shown in FIG. 6 is configured to enable the heating function using the indoor unit (I).

The heat pump 1000 according to embodiments enables heating using the radiation process and using the indoor unit (I). Considering the capacity of the compressor 120 provided in the outdoor unit (O), both heating processes performed by the outdoor unit (O) may not be sufficient. Because of this, the operation mode shown in FIG. 6 provides only heating using the indoor unit (I) and floor heating using the radiation process.

As a result, the refrigerant control valve 170 controls the refrigerant compressed in the compressor 120 to be supplied to the heating/cooling direction control valve 190. Since the floor heating function is not provided, the refrigerant compressed in the compressor 120 does not have to be supplied to the hydro-unit (H). The heating/cooling direction control valve 190 may guide or direct the refrigerant supplied from the hydro-unit (H) toward the indoor heat exchanger connection pipe 44 and the refrigerant may be guided or directed by the indoor heat exchanger 320 thereafter.

Heating of internal air may be performed by condensing of the refrigerant in the indoor heat exchanger 320. The refrigerant condensed in the indoor heat exchanger 320 may be supplied to the outdoor heat exchanger 140 via the heat exchanger connection pipe 32 configured to connect the outdoor heat exchanger 140 with the indoor heat exchanger 320. Thereafter, the refrigerant may be expanded in the expansion devices 210 and 310. The refrigerant may be evaporated in the outdoor heat exchanger 140 and guided toward the compressor 120 by the heating/cooling direction control valve 190.

The indoor heating performed by the indoor unit (I) may be provided by such an operation mode.

This operation mode may be operated when the temperature of the external air is equal to or less than the preset second temperature above approximately 0°C and equal to or greater than the preset first temperature. To prevent the freezing and bursting, the water circulating between the boiler 700 and the radiation heater 600 has to circulate continuously, even in a state in which the boiler 700 or the hydro-unit (H) is not operated.

In this case, the first boiler valve 740 and the second boiler valve 750 provided in the boiler supply pipe 84 may control the water heat-exchanged with the refrigerant in the hydro-unit heat exchanger 530 to flow to the boiler 700. The boiler pump 730 and/or the floor heating pump 550 may be operated to pump the water circulating through the hydro-unit (H).

In addition, when the temperature of the external air is equal to or greater than the preset second temperature above approximately 0 °C, there is no danger of the boiler 700 freezing and bursting and only the indoor unit (I) may be operated for heating. When the floor heating function is switched off, the water does not have to circulate between the radiation heater 600 and the boiler 700.

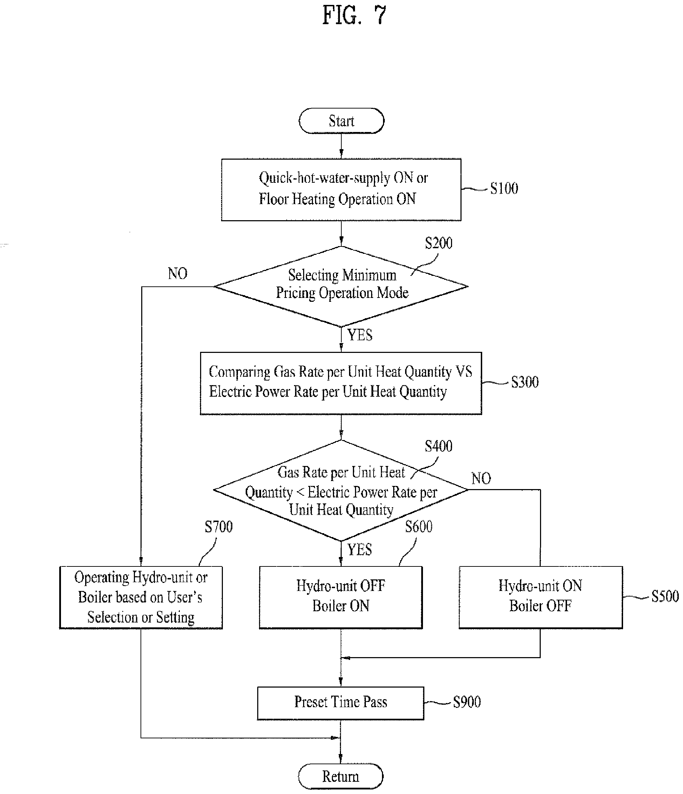

FIG. 7 is a flow chart illustrating a control method for a heat pump according to an embodiment. It may be assumed that a Smart Grid may be used in the environments where the heat pump according to embodiments is used.

The Smart Grid may include an electric power station for generating electricity by way of nuclear power generation or hydroelectric power generation, and a solar power station and a wind power station, which use renewable energy, such as sunlight and wind power. The electric power station may transmit electricity to an outdoor station via a power cable and the outdoor station may transmit the electricity to a substation. Here, the electricity transmitted to the substation may be distributed to households and offices via electricity storage devices.

Households using a Home Area Network (HAN) may generate and supply electricity using a fuel cell mounted in self-solar power generation facilities or in Plug-in Hybrid Electric Vehicle (PGEV), and they may sell remaining electricity to others. With a smart metering infrastructure, an office or household may recognize the electric power and power rates used therein in real time. Because of this, a user may recognize current electric power and electric rates, and he or she may take measures to reduce power consumption or power rates depending on the circumstances.

The power station, outdoor station, storage device, and consuming places may enable duplex transmission. As a result, the consuming places may not receive electricity unilaterally but may notify their circumstances to the other electric power storage devices, outdoor stations and power stations to implement electricity generation and electricity distribution according to the circumstances.

An EMS (Energy Management System) employed for real-time electric power management and real-time power consumption prediction and an AMI (Advanced Metering Infrastructure) for real-time metering of the power consumption may be important in the Smart Grid. Such an EMS and AMI may be independent devices or a single device configured to perform functions of the two devices.

The AMI under a Smart Grid is basic technology for integrating consumers based on open architecture and enables the consumers to use electricity efficiently and electric power suppliers to manage the system by detecting an error in the system. Here, the term "open architecture" may refer to all kinds of electric appliances connected to each other in a Smart Grid, regardless of manufacturers thereof, in comparison to a conventional communication network.

As a result, the metering infrastructure used in the Smart Grid may make possible consumer-friendly efficiency, such as Prices to Devices'. That is, a real-time price signal of the electric power market may be delivered via an EMS installed in each household and the EMS may communicate with each electric appliances to control the same. As a result, the user may recognize electric power information of each electric appliance after seeing the EMS, and he or she may implement an electric power information process, for example, power consumption or setting of power-rate limit based on the recognized power information. The EMS may include a local EMS used in the offices or household and a center or central EMS for processing information acquired by the local EMS.

As real-time communication related to the electric power information between the supplier and consumer is possible in the Smart Grid, "real-time Grid response" may be enabled. For example, the power rate may be differentiated based on time periods or a time of power usage, and a quantity of the power usage may be differentiated in a case in which the power rate bill is different based on the power supply company. In addition, the power supplier may adjust the power rate or the power supply based on the response of the consumers.

An electricity supply network system may include a measuring device (i.e., a Smart meter) capable of measuring the electricity supplied to the households and/or the power rate in real time, and an energy management system (E) connected with a plurality of electric devices, such as electric appliances, to control the operation the plurality of the electric devices.

The EMS may control each electric appliance based on power rate information directly, or it may provide only the power rate information to each of the electric appliances. In the latter case, a control part or controller of each electric appliance may generate a control signal for the electric appliance based on the information provided by the EMS.

As a result, the EMS may provide a control part or controller of a heat pump with information on power rate per unit heat quantity at a preset interval or it may provide the control part with a control signal for the heat pump. The control part of the heat pump may control each of element of the heat pump based on the transmitted control signal.

The power rate for each household may be billed on a pay-by-time system. The power rate may be high in hours having increased power consumption and may be low in hours having relatively less power consumption, such as night hours. An energy saving mode may reduce the power consumption, and the energy saving mode may guide or perform a saving mode forcibly, although with hardly different technical effects from the effects of the mode set by the user.

Under a Smart Grid according to embodiments, the power rate bill may be variable in a period of a preset date(s), preset week(s), or preset month(s). More particularly, the power rate may be billed differently based in specific hours on a specific date. For example, the power rate may be billed high in an On Peak Time period in which power consumption is large, and it may be billed relatively less high in an "Off Peak" Time period.

In addition, under the Smart Grid, the electric power supplier may provide electric power consumers with information on the current power rate billed in each of the periods in real time.

The power rate information may be categorized into a schedule information type, which provides the power rate which will be billed after the period to which the current time belongs, or a real time information type, which provides only the power rate billed for the period to which the current time belongs. The former has an advantage of easy expectation of the next power rate. However, it is difficult to determine the power rate after the current time period from the former type, because it does not provide the information on the power rate billed after the current time period.

As mentioned above, Smart Grid enables two-way communication between the electric power supplier and the electric power consumer. The electric power supplier may monitor power consumption of the consumer in real time, and it may bill the power rate for the next time flexibly. The electric power consumer may receive the power rate bill in real time, and he or she may postpone a driving time of the electric appliance or stop use of the electric appliance as a result. Because of this, the electric power consumer may save power, and the electric power supplier may distribute the electric power efficiently.

Also, the electric power supplier may transmit the power rate information on the power used by the consumer using various schemes. For example, all of the power rate information per preset hour for a preset time period after a preset time period to which the current time belongs, or only power rate information per preset hour for the preset time period to which the current time belongs in real time.

In other words, information on the power rate billed in a period of 1 hour or 30 minutes for a specific date, a specific week, or a specific month may be provided in advance. Alternatively, information on the power rate billed for a preset time period to which the current time belongs may be provided in real time.

For example, the electric power supplier may send information on the electric power rate to the electric power consumer, such as a household. The power rate information may be configured variously. In other words, the power rate information may be configured of information on the power rate billed for preset hours of a preset time period after receiving the information, or it may be configured of the continuously sent information on the power rate for preset hours in real time. For example, the information on the power rate for the preset hours of the preset time period after the receiving information may refer to the information provided by categorizing the information on the power rate billed for 24 hours after 12 noon or 12 midnight everyday into time bands of an hour or 30 minutes.

A control or controller part of such the EMS may be integrally provided with the electric appliance. In this case, an auxiliary power supply independent from a power supply of the electric appliance may be provided, and the EMS may be provided with the electric power constantly, regardless of the power supplied to the electric appliance via the power supply. In this case, the control part may receive not only the power rate billed for the time period to which the current time belongs, but also the information on the power rate billed for each of prior periods to be stored.

The heat pump 1000 according to embodiments may use the boiler 700 or the hydro-unit (H) for radiation heating selectively. The hydro-unit (H) may be driven by electricity, like an air conditioner, and the boiler 700 may be driven by fossil fuels. The fossil fuel used to drive the boiler 700 may be gas.

As mentioned above, under a Smart Grid according to embodiments, the power rate bill may be variable in a period of a specific date, a specific week, or a specific month. More particularly, the power rate may be varied in specific hours on a specific date. For example, the power rate may be billed high in the On Peak Time period when power consumption is large, and the power rate may be billed relatively less high in the off peak time period when power consumption is relatively small.

In other words, the Smart Grid according to embodiments may be an environment in which the power rate is varied in real time. The gas rate is not so sensitive to variation in the time, compared with the electric power rate. Here, it may be assumed that the gas rate is varied in real time.

According to a control method of the heat pump shown in FIG. 7, when the heating operation is performed, the power rate and the gas rate billed per unit quantity of heat may be compared with each other.

As mentioned above, a household which is a main consumer of the Smart Grid may construct a single electricity supply network system. The electricity supply network system may include a measuring device (i.e., a Smart meter) capable of measuring the electricity supplied to the households and/or the power rate in real time, and the energy management system (E) connected with a plurality of electric devices, such as electric appliances, to control the operation the plurality of the electric devices. The power rate may be billed to the household on a pay-by-time system. The power rate may be high in hours having increased power consumption and the power rate may be low in hours having relatively less power consumption, such as night hours.

As a result, the EMS (E) provided in each household may receive information on the electric power rate and/or the gas rate in the pay-by-time basis from an external device. The EMS may provide the heat pump 1000 with the received information on the electric power rate and/or the gas rate per unit heat quantity, or it may directly control the heat pump 1000 according to embodiments.

The EMS (E) may include a display configured to display electricity information and/or external environmental information, an input part or device configured to enable the user to operate the EMS (E), a communication unit or device configured to transmit and receive information to and from an external device, and a clock control part or controller. Information on the operation mode selectively input by the user or the electric power rate may be stored in the control part. As a result, when the gas rate billed per unit heat quantity is fixed not varied, the user may directly input the gas rate via the input part of the EMS (E).

The plurality of the operation modes may be stored in the control part of the heat pump or the hydro-unit, such that the user may control one of them to be operated. The plurality of the operation modes may include a minimum pricing based operation mode.

As shown in FIG. 7, when a user starts the floor heating operation, in step S100, the control part or controller of the EMS or the control part or controller of the heat pump may determine whether to operate the heat pump 1000 in the minimum pricing operation mode based on the user's selection or setting, in step S200.

If the operation mode of the heat pump 1000 is the minimum pricing operation mode based on the result of the determination, the control part of the EMS or the control part of the heat pump may compare the electric power rate per unit heat quantity with the gas rate per unit heat quantity, in step S300.

If the electric power rate per unit heat quantity is less high than the gas rate per unit heat quantity, in step S400 based on the result of the determination, the control part of the EMS or the control part of the heat pump may provide the heating function using the hydro-unit (H), without operating the boiler 700, in step S500. If the gas rate per unit heat quantity is less high than the electric power rate per unit heat quantity based on the result of the determination, in step S400, the control part of the EMS (E) stops the operation of the hydro-unit (H) and starts the operation of the boiler 700, to provide the heating function, in step S600.

When the user does not select the minimum pricing operation mode, the hydro-unit (H) or the boiler 700 may be operated based on the user's selection or setting to provide the heating function, in step S700.

When the user selects the minimum pricing operation mode, the electric power rate may be varied in a period of preset hours. Because of this, when the preset hours passes, in step S900, the method may return to the process which performs the comparison between the electric power rate per unit heat quantity and the gas rate per unit heat quantity and the process may be repeated.

When the user does not select the minimum pricing operation mode, the hydro-unit (H) or the boiler 700 may be operated based on the user's selection or setting and the heating function may be provided, in step S700. In this case, the control part of the EMS or the control part of the heat pump may operate the hydro-unit (H) or the heat pump 1000 based on a range of the temperatures (Tₒ) of external air, as mentioned above.

As mentioned above, the hydro-unit (H) of the heat pump has the characteristic of drastically deteriorating efficiency as the temperature (Tₒ) of the external air drops. Because of this, when the user selects the heating operation, the temperature (Tₒ) of the external air as well as the rate per unit heat quantity may be a variably used to determine which one of the hydro-unit (H) and the boiler 700 is operated.

In addition, even when the user desires the heating function and even when considering the efficiency of the hydro-unit (H), the user may not want the cost of the heating function to increase too much. As a result, the user may select a peak pricing operation mode, which is different from the minimum pricing operation mode relating to the operation mode shown in FIG. 7.

In other words, the peak pricing operation mode is performed for the gas rate per unit heat quantity or the electric power rate per unit heat quantity and the efficiency of the hydro-unit (H) not to be higher than a peak of the rate set by the user.

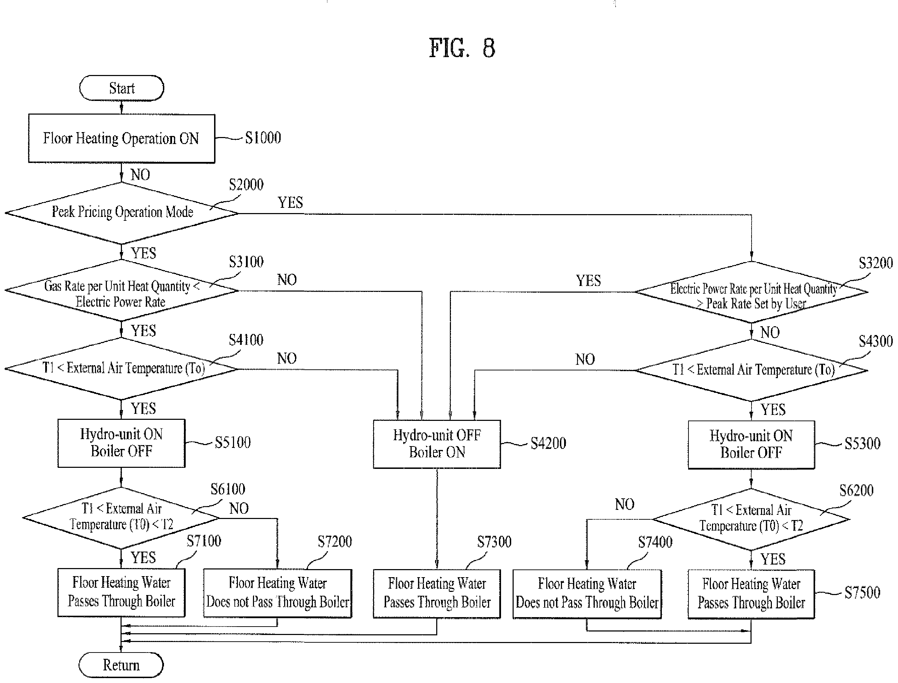

FIG. 8 illustrates a flow chart illustrating a peak pricing rate operation mode as a control method of the heat pump according to an embodiment.

When the user starts the floor heating operation, in stepS1000, the control part or controller of the EMS (E) may determine whether to operate the heat pump in the peak pricing operation mode based on the user's selection or setting, step S2000.

If the operation of the heat pump 1000 is the peak pricing operation mode based on the result of the determination, the control part of the EMS or the control part of the heat pump may determine whether the electric power rate per unit heat quantity is over the peak rate set by the user, in step S3200. In this case, the gas rate per unit heat quantity is regularly lower than the peak rate set by the user. Even if it is variable, the gas rate per unit heat quantity may be set to be lower than the peak rate set by the user.

If the electric power rate per unit heat quantity is higher than the peak rate set by the user based on the result of the determination, the boiler 700 may be operated in step S4200, the hydro-unit being in standby after its operation is stopped.

In contrast, if the electric power rate per unit heat quantity is lower than the peak rate set by the user based on the result of the determination, the temperature (Tₒ) of the external air is compared with the preset second temperature (T₂) above approximately 0°C, in step S4300.

In this case, even when the electric power rate per unit heat quantity is lower than the peak rate set by the user in a case that the temperature (Tₒ) of the external air is equal to or less than the preset first temperature (T₁) below approximately 0°C, the efficiency of the hydro-unit (H) will deteriorate drastically. Because of this, the operation of the hydro-unit (H) may be stopped and the boiler 700 may be put into operation, in step S4200. When the boiler 700 is operated, heating water used for the floor heating may pass through the boiler 700 necessarily, in step S7300.

When the electric power rate per unit heat quantity is lower than the peak rate set by the user, and the temperature (Tₒ) of the external air is more than the preset first temperature (T₁) below approximately 0°C, the heating operation may be performed using the hydro-unit (H) and the operation of the boiler 700 may be stopped, in step S5300. In this case, the control part of the EMS or the control part of the heat pump may compare the temperature (Tₒ) of the external air with a preset second temperature (T₂) above approximately 0°C, in step S6200. When the temperature (Tₒ) of the external air is less than the preset second temperature (T₂) above approximately 0°C, the water circulating through the hydro-unit (H) and the radiation heating 600 for the floor heating may be controlled to pass through the boiler 700, in step S7500, even when the boiler 700 is not operated. However, when the temperature (Tₒ) of the external air is higher than the preset second temperature (T₂) above approximately 0°C, there is no danger of freezing and bursting of the boiler 700, and thus, it is not necessary to control the water circulating in the hydro-unit (H) and the radiation heater 600 to pass through the boiler 700, in step S7400.

When the peak pricing operation mode is not selected or set by the user, in step S2000, the control part of the EMS may compare the gas rate per unit heat quantity and the electric power per unit heat quantity with each other, in step S3100, and the temperature (Tₒ) of the external air may be compared with the preset first temperature (Tₒ) below approximately 0°C, in step S4100. When the gas rate per unit heat quantity is less than the electric power rate per unit heat quantity, or the temperature (Tₒ) of the external air is higher than the preset first temperature below approximately 0°C, the operation of the boiler 700 may be stopped and the hydro-unit (H) operated, in step S5100.

When the temperature (Tₒ) of the external air is lower than the preset first temperature (T₁) below approximately 0°C based on the result of the comparison, the efficiency of the hydro-unit (H) may deteriorate even with the gas rate per unit heat quantity being higher than the electric power. Because of this, the operation of the hydro-unit (H) may be stopped and the boiler 700 is operated, in step S4200.

The temperature (T₀) of the external air may be compared with the preset second temperature (T₂) above approximately 0°C, in step S6100. When the temperature (Tₒ) of the external air is lower than the preset second temperature (T₂) above approximately 0°C, the water circulating through the hydro-unit (H) and the radiation heating 600 for the floor heating may be controlled to pass through the boiler 700, in step S7100, even without operating the boiler 700, to prevent the freezing and bursting of the boiler 700. However, when the temperature (Tₒ) of the external air is higher than the preset second temperature (T₂) above approximately 0°C, there is no danger of the freezing and bursting of the boiler 700. Because of this, the water circulating through the hydro-unit (H) and the radiation heater 600 for the floor heating need not pass through the boiler 700, in step S7200.

Embodiments disclosed herein provide a heat pump that may include an outdoor unit or device configured to compress refrigerant; a hydro-unit or device configured to heat-exchange the compressed refrigerant with water; a boiler configured to heat water circulating the hydro-unit or water supplied from a commercial water supply system; a radiation heater part configured to perform heating by using the water heated by the hydro-unit or the boiler; and a control part or controller configured to control the outdoor unit, the hydro-unit and the boiler.

The boiler may be operated, when a temperature of external air is equal to or less than a preset or predetermined first temperature below approximately 0°C, and the hydro-unit may be operated, when the temperature of the external air is equal to or greater than the first temperature. Water circulating the radiation heater part after being heat-exchanged with the hydro-unit may pass the boiler, when the temperature of the external air is equal to or less than a preset or predetermined second temperature above approximately 0°C. Water circulating the radiation heater part after being heat-exchanged with refrigerant in the hydro-unit may pass the boiler and only a pump provided in the boiler may be operated, when the temperature of the external air is equal to or more than the preset first temperature below approximately 0°C and equal to or less than the preset second temperature above approximately 0°C.

Water circulating the radiation heater part after being heat-exchanged with refrigerant in the hydro-unit may not pass the boiler, when the temperature of the external air is equal to or greater than the preset second temperature above approximately 0°C.

Each of the hydro-unit and the boiler may include at least one pump configured to pump heat-exchanged water. The at least one pump may be operated when the temperature of the external air is equal to or less than the preset second temperature above approximately 0°C.

The control part may operate the hydro-unit, when the temperature of the external air is equal to or less than the preset first temperature below approximately 0°C and when it is determined that the boiler has malfunctioned. When the temperature of the external air is equal to or more than the preset first temperature below approximately 0°C and when it is determined that the hydro-unit has malfunctioned, the control part may operate the boiler.

The first temperature may be equal to or greater than approximately -7°C (7 degrees below zero) and equal to or less than approximately -3°C (3 degrees below zero), and the second temperature may be equal to or greater than approximately 3°C (3 degrees above zero) and equal to or less than 7°C (7 degrees above zero).

The control part may compare an electric power rate per unit heat quantity with a gas rate per unit heat quantity, and the control part may selectively operate the boiler and the hydro-unit based on a result of the comparison to minimize the rates per unit heat quantity. The control part may stop operation of the hydro-unit and operate the boiler, or may stop operation of the boiler and operate the hydro-unit, based on the temperature of the external air.

The heat pump may further include a quick-hot-water-supply unit or device configured to receive water heated by the boiler selectively after being supplied from a commercial water supply system.

Embodiments disclosed herein further provide a heat pump that may include an outdoor unit or device including an outdoor heat exchanger and a compressor; a hydro-unit or device including at least one heat exchanger configured to heat-exchange refrigerant supplied by the outdoor unit with water; a boiler configured to heat water circulating the hydro-unit or water supplied by a commercial water supply system selectively; a radiation heater part configured to heat a floor by circulating the water having passed the hydro-unit or the hydro-unit and the boiler; and a control part configured to control the outdoor unit, the hydro-unit, and the boiler.

A floor supply pipe and a floor collection pipe may be provided to connect the hydro-unit with the radiation heater part. A boiler supply pipe and a boiler collection pipe, which are branched from the floor supply pipe, may be provided to connect the floor supply pipe with the boiler.

The boiler may include a combustion heating part or heater configured to heat water supplied to the radiation heater part using combustion heat, and a heat exchange heating part or heater configured to heat water supplied by the commercial water supply system using the water heated by the combustion heating part. The boiler may be connected with the hydro-unit to be able to communicate with the hydro-unit and a control signal of the boiler may be transmitted via the hydro-unit.

The control part may be connected to an energy management system configured to receive information on an electric power rate. The energy management system may provide information on the electric power rate per unit heat quantity in a preset period.

The control part may include the electric power rate per unit heat quantity with the gas rate per unit heat quantity. The control part may stop operation of the boiler and operate the hydro-unit, when the electric power rate per unit heat quantity is lower than the gas rate per unit heat quantity, and the control part may stop operation of the hydro-unit and operate the boiler, when the gas rate per unit heat quantity is lower than the electric power rate per unit heat quantity.

When a user sets a peak rate per unit heat quantity, the control part may compare the electric power rate per unit heat quantity and the gas rate per unit heat quantity with the peak rate per unit heat quantity set by the user, and the control part may operate the boiler only in a period in which the electric power rate per unit heat quantity is higher than the peak rate per unit heat quantity set by the user.

When the temperature of the external air is equal to or less than a preset or predetermined first temperature below approximately 0°C even in a case that the electric power per unit heat quantity is lower than the peak rate per unit heat quantity and the gas rate per unit heat quantity, the control part may stop the operation of the hydro-unit and operate the boiler.

The heat pump according to embodiments disclosed herein may include the boiler, and it may be operated in communication with the boiler selectively based on the electric power rate per unit heat quantity. Further, the heat pump according to embodiments disclosed herein may use the boiler when the temperature of the external air is equal to or less than a preset or predetermined temperature. As a result, a sufficient heating function or a sufficient quick-hot-water-supply operation may be provided.

Still further, in a case in which a power grid is a Smart Grid is utilized, the heat pump according to embodiments disclosed herein may operate the boiler or the hydro-unit of the heat pump selectively based on the electric power rate per unit heat quantity. As a result, a cost of the heating or quick-hot-water supply may be minimized.

It will be apparent to those skilled in the art that various modifications and variations can be made in embodiments as broadly described herein without departing from the spirit or scope of the embodiments as broadly described herein. Thus, it is intended that the embodiments as broadly described herein covers the modifications and variations of this embodiments as broadly described herein provided they come within the scope of the appended claims and their equivalents.

Any reference in this specification to "one embodiment," "an embodiment," "example embodiment," etc., means that a particular feature, structure, or characteristic described in connection with the embodiment is included in at feast one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A heat pump (1000), comprising:
an outdoor device (O) configured to compress a refrigerant;
a hydro-device (H) configured to heat-exchange the compressed refrigerant with water;
a boiler (700) configured to selectively heat water circulating through the hydro-device or water supplied from a commercial water supply system;
a radiation heater (600) configured to perform heating using the water heated by the hydro-device or the boiler; and
a controller (6) configured to control the outdoor device, the hydro-device, and the boiler,
wherein the boiler (700) comprises: a combustion heater (720) configured to combust fossil fuels to heat water to be supplied to the radiation heater using combustion heat; and a heat exchange heater (710) configured to heat water supplied from the commercial water supply system using the water heated by the combustion heater, and
wherein the combustion heater (720) is configured to heat the water supplied via a floor supply pipe (82),
**characterized in that** the floor supply pipe (82) includes a first boiler valve (740) and a second boiler valve (750) and is connected to a boiler supply pipe (84) and a boiler collection pipe (85) which pass through the boiler (700),
the first and second boiler valves (740, 750) are configured to supply the water supplied from the hydro-device (H) to the radiation heater (600) directly or via the boiler (700), and
the supply of the water to the radiation heater (600) via the boiler (700) along with operating the boiler (700) and stopping the operation of the hydro-device (H) is performed when a temperature of external air is equal to or less than a preset temperature.

2. The heat pump as claimed in claim 1, wherein the controller is configured to control the boiler to operate, when a temperature of external air is equal to or less than a predetermined first temperature below approximately 0°C, and wherein the controller is configured to control the hydro-device to operate, when the temperature of the external air is equal to or greater than the predetermined first temperature.

3. The heat pump as claimed in claim 2, wherein the first temperature is equal to or greater than approximately -7°C and equal to or less than approximately -3°C.

4. The heat pump as claimed in claim 2, wherein, when the temperature of the external air is equal to or less than a predetermined second temperature above approximately 0°C, water circulating through the radiation heater after being heat-exchanged with refrigerant in the hydro-device passes through the boiler.

5. The heat pump as claimed in claim 2, wherein when the temperature of the external air is equal to or greater than the predetermined first temperature below approximately 0°C and equal to or less than a predetermined second temperature above approximately 0°C, water circulating through the radiation heater after being heat-exchanged with refrigerant in the hydro-device passes through the boiler and only a pump provided in the boiler is configured to operate.

6. The heat pump as claimed in claim 2, wherein when the temperature of the external air is equal to or greater than a predetermined second temperature above approximately 0°C, water circulating through the radiation heater after being heat-exchanged with refrigerant in the hydro-device does not pass through the boiler.

7. The heat pump as claimed in claim 2, wherein each of the hydro-device and the boiler comprises at least one pump configured to pump heat-exchanged water, and wherein the at least one pump is configured to operate when the temperature of the external air is equal to or less than a predetermined second temperature above approximately 0°C.

## Patentansprüche

1. Wärmepumpe (1000), mit:
einer Außenvorrichtung (O), die konfiguriert ist, ein Kältemittel zu verdichten;
einer Hydrovorrichtung (H), die konfiguriert ist, das verdichtete Kältemittel mit Wasser wärmezutauschen;
einem Kessel (700), der konfiguriert ist, selektiv Wasser, das durch die Hydrovorrichtung zirkuliert, oder Wasser zu erwärmen, das aus einem kommerziellen Wasserversorgungssystem zugeführt wird;
einer Strahlungsheizvorrichtung (600), die konfiguriert ist, eine Erwärmung mittels des durch die Hydrovorrichtung oder den Kessel erwärmten Wassers durchzuführen; und
eine Steuereinrichtung (6), die konfiguriert ist, die Außenvorrichtung, die Hydrovorrichtung und den Kessel zu steuern,
wobei der Kessel (700) aufweist: eine Verbrennungsheizvorrichtung (720), die konfiguriert ist, fossile Brennstoffe zu verbrennen, um der Strahlungsheizvorrichtung zuzuführendes Wasser mittels Verbrennungswärme zu erwärmen; und eine Wärmetauschheizvorrichtung (710), die konfiguriert ist, aus dem kommerziellen Wasserversorgungssystem zugeführtes Wasser mittels des durch die Verbrennungsheizvorrichtung erwärmten Wassers zu erwärmen, und
wobei die Verbrennungsheizvorrichtung (720) konfiguriert ist, das Wasser zu erwärmen, das über eine Bodenversorgungsleitung (82) zugeführt wird,
**dadurch gekennzeichnet, dass** die Bodenversorgungsleitung (82) ein erstes Kesselventil (740) und ein zweites Kesselventil (750) aufweist und mit einer Kesselversorgungsleitung (84) und einer Kesselsammelleitung (85) verbunden ist, die durch den Kessel (700) geht, das erste und zweite Kesselventil (740, 750) konfiguriert sind, das von der Hydrovorrichtung (H) zugeführte Wasser der Strahlungsheizvorrichtung (600) direkt oder über den Kessel (700) zuzuführen, und
die Zufuhr des Wassers zur Strahlungsheizvorrichtung (600) über den Kessel (700) zusammen mit dem Betreiben des Kessels (700) und dem Stoppen des Betriebs der Hydrovorrichtung (H) durchgeführt wird, wenn eine Temperatur der Außenluft gleich oder niedriger als eine voreingestellte Temperatur ist.

2. Wärmepumpe nach Anspruch 1, wobei die Steuereinrichtung konfiguriert ist, den Kessel zu steuern zu arbeiten, wenn eine Temperatur der Außenluft gleich oder niedriger als eine vorgegebene erste Temperatur unter etwa 0°C ist, und wobei die Steuereinrichtung konfiguriert ist, die Hydrovorrichtung zu steuern zu arbeiten, wenn die Temperatur der Außenluft gleich oder höher als die vorgegebene erste Temperatur ist.

3. Wärmepumpe nach Anspruch 2, wobei die erste Temperatur gleich oder höher als etwa -7°C und gleich oder niedriger als etwa -3°C ist.

4. Wärmepumpe nach Anspruch 2, wobei, wenn die Temperatur der Außenluft gleich oder niedriger als eine vorgegebene zweite Temperatur über etwa 0°C ist, Wasser, das durch die Strahlungsheizvorrichtung zirkuliert, nachdem es mit dem Kältemittel in der Hydrovorrichtung wärmegetauscht worden ist, durch den Kessel geht.

5. Wärmepumpe nach Anspruch 2, wobei wenn die Temperatur der Außenluft gleich oder höher als die vorgegebene erste Temperatur unter etwa 0°C und gleich oder niedriger als eine vorgegebene zweite Temperatur über etwa 0°C ist, Wasser, das durch die Strahlungsheizvorrichtung zirkuliert, nachdem es mit dem Kältemittel in der Hydrovorrichtung wärmegetauscht worden ist, durch den Kessel geht und nur eine im Kessel vorgesehene Pumpe konfiguriert ist zu arbeiten.

6. Wärmepumpe nach Anspruch 2, wobei wenn die Temperatur der Außenluft gleich oder höher als eine vorgegebene zweite Temperatur über etwa 0°C ist, Wasser, das durch die Strahlungsheizvorrichtung zirkuliert, nachdem es mit dem Kältemittel in der Hydrovorrichtung wärmegetauscht worden ist, nicht durch den Kessel geht.

7. Wärmepumpe nach Anspruch 2, wobei jeweils die Hydrovorrichtung und der Kessel mindestens eine Pumpe aufweisen, die konfiguriert ist, wärmegetauschtes Wasser zu pumpen, und wobei die mindestens eine Pumpe konfiguriert ist zu arbeiten, wenn die Temperatur der Außenluft gleich oder niedriger als eine vorgegebene zweite Temperatur über etwa 0°C ist.

## Revendications

1. Pompe à chaleur (1000), comprenant :
un dispositif extérieur (O) prévu pour comprimer un réfrigérant ;
un dispositif hydrique (H) prévu pour soumettre le réfrigérant comprimé à un échange de chaleur avec de l'eau ;
une chaudière (700) prévue pour chauffer sélectivement l'eau circulant dans le dispositif hydrique ou l'eau refoulée par un système de distribution commerciale d'eau ;
un chauffage à rayonnement (600) prévu pour chauffer au moyen de l'eau chauffée par le dispositif hydrique ou la chaudière ; et
un contrôleur (6) prévu pour commander le dispositif extérieur, le dispositif hydrique et la chaudière,
où la chaudière (700) comprend : un chauffage à combustion (720) prévu pour brûler des carburants fossiles afin de chauffer l'eau devant alimenter le chauffage à rayonnement au par chaleur de combustion ; et un chauffage à échange thermique (710) prévu pour chauffer l'eau refoulée par le système de distribution commerciale d'eau au moyen de l'eau chauffée par le chauffage à combustion, et
où le chauffage à combustion (720) est prévu pour chauffer l'eau refoulée par une conduite d'alimentation au plancher (82),
**caractérisée en ce que** la conduite d'alimentation au plancher (82) comprend une première vanne (740) de chaudière et une deuxième vanne (750) de chaudière et est reliée à une conduite d'alimentation (84) de chaudière et à une conduite collectrice (85) de chaudière traversant la chaudière (700),
la première et deuxième vannes (740, 750) de chaudière sont prévues pour refouler l'eau provenant du dispositif hydrique (H) vers le chauffage à rayonnement (600), directement ou par la chaudière (700), et
le refoulement de l'eau vers le chauffage à rayonnement (600) par la chaudière (700) par mise en service de la chaudière (700) et arrêt de fonctionnement du dispositif hydrique (H) est exécuté quand la température de l'air extérieur devient égale ou inférieure à une température prédéfinie.

2. Pompe à chaleur selon la revendication 1, où le contrôleur est prévu pour commander la mise en service de la chaudière quand la température de l'air extérieur devient égale ou inférieure à une première température prédéfinie en dessous de sensiblement 0 °C, et où le contrôleur est prévu pour commander la mise en service du dispositif hydrique quand la température de l'air extérieur devient égale ou supérieure à la première température prédéfinie.

3. Pompe à chaleur selon la revendication 2, où la première température est égale ou supérieure à sensiblement -7 °C et égale ou inférieure à sensiblement -3 °C.

4. Pompe à chaleur selon la revendication 2, où, quand la température de l'air extérieur devient égale ou inférieure à une deuxième température prédéfinie au-dessus de sensiblement 0 °C, l'eau circulant dans le chauffage à rayonnement traverse la chaudière après avoir été soumise à échange de chaleur avec le réfrigérant dans le dispositif hydrique.

5. Pompe à chaleur selon la revendication 2, où, quand la température de l'air extérieur devient égale ou supérieure à la première température prédéfinie en dessous de sensiblement 0 °C et égale ou inférieure à une deuxième température prédéfinie au-dessus de sensiblement 0° C, l'eau circulant dans le chauffage à rayonnement traverse la chaudière après avoir été soumise à échange de chaleur avec le réfrigérant dans le dispositif hydrique et une seule pompe montée dans la chaudière est prévue pour être mise en service.

6. Pompe à chaleur selon la revendication 2, où, quand la température de l'air extérieur devient égale ou supérieure à une deuxième température prédéfinie au-dessus de sensiblement 0° C, l'eau circulant dans le chauffage à rayonnement ne traverse pas la chaudière après avoir été soumise à échange de chaleur avec le réfrigérant dans le dispositif hydrique.

7. Pompe à chaleur selon la revendication 2, où le dispositif hydrique ainsi que la chaudière comprennent au moins une pompe prévue pour pomper l'eau soumise à échange de chaleur, et où ladite au moins une pompe est prévue pour être mise en service quand la température de l'air extérieur devient égale ou inférieure à une deuxième température prédéfinie au-dessus de sensiblement 0 °C.
